# EUROPEAN PATENT APPLICATION

(11) **EP 4 304 018 A1**
(43) Date of publication of application: **10.01.2024**
(21) Application number: 23183554.7
(22) Date of filing: 05.07.2023
(51) Int. Cl.: H01R 4/30, H01R 11/28

(54) **MODULE CONNECTOR WITH AT LEAST ONE SLIDABLE SCREW AND CONNECTION ASSEMBLY WITH SUCH A MODULE CONNECTOR**

(30) Priority: 05.07.2022 DE 102022116785
(71) Applicant: TE Connectivity Germany GmbH, 64625 Bensheim (DE)
(72) Inventor: WOLF, Marcus, 64625 Bensheim (DE); SCHAEFER, Maik, 64625 Bensheim (DE); HOFFMANN, Bjoern, 64625 Bensheim (DE); BUCHHOLZ, Ron, 64625 Bensheim (DE); DISTLER, Patrick, 64625 Bensheim (DE); EHEIM, Manuel, 64625 Bensheim (DE)
(74) Representative: Grünecker Patent- und Rechtsanwälte PartG mbB

(57) **Abstract**

The present invention relates to a module connector (1) for electrically connecting two electric modules (10), wherein the module connector (1) comprises a busbar (4), at least one screw (26) rotatable relative to the busbar (4) and at least one screw guide (38) rotatable relative to the busbar (4), wherein the busbar (4) comprises at least one flat face (6), which defines a busbar plane (8), and at least one section of the busbar (4) comprises a through opening (16) extending perpendicularly to the busbar plane (8) through the busbar (4), wherein the at least one screw guide (38) is held at least sectionally in the through opening (16) and has a hole (40) extending parallel to the through opening (16), in which the at least one screw (26) is held at least sectionally, and wherein the at least one screw (26) is held in the through opening (16) slidably parallel to the busbar plane (8). Owing to the slidability of the screw, certain positional tolerances can be compensated in a force-free manner upon connecting the electric modules (10). Further, the invention relates to a connection assembly (2) with such a module connector (1).

## Description

The present invention relates to a module connector for electrically connecting two electric modules, in particular two battery modules. The battery modules are preferably battery modules for electric vehicles or power engineering systems. Furthermore, the present invention relates to a connection assembly with such a module connector.

The relative position between the two electric modules to be connected with the module connector is subject to tolerance-related fluctuations, even if the electric modules are arranged in a grid dimension. In order to compensate for these positional tolerances, conventional module connectors therefore provide flexible conductor sections, for example made of braided copper wire, which enable the position of fastening means of the module connector (e.g. screws) to be adapted to the different relative positions of the electric modules.

However, these flexible conductor sections have to be bent to shape, sometimes with a high degree of force, and often apply an elastic restoring force to the module connector after it has been installed. In addition, the length of the flexible conductor sections influences their flexibility. In other words, the shorter the flexible conductor section, the smaller the compensable position tolerance.

Thus, there is a need to connect electric modules despite positional tolerances, irrespective of their relative position, and in particular irrespective of their distance, without exerting a high degree of force.

Therefore, the problem underlying the present invention is to provide means for connecting electric modules with which positional tolerances can be compensated for in a force-free manner and irrespective of the dimensions.

This problem is solved by a module connector of the type mentioned introductorily, wherein the module connector comprises a busbar, at least one screw rotatable relative to the busbar, and at least one screw guide rotatable relative to the busbar, wherein the busbar comprises at least one flat face which defines a busbar plane, and at least one section of the busbar comprises a through opening extending perpendicularly to the busbar plane through the busbar, wherein the at least one screw guide is held at least sectionally in the through opening and has a hole extending parallel to the through opening, in which the at least one screw is held at least sectionally, and wherein the at least one screw is held in the through opening slidably parallel to the busbar plane.

Owing to the slidability of the screw, the solution according to the invention makes it possible to compensate for a certain positional tolerance upon connection of the electric modules. In other words, the module connector can be adapted to different relative positions of the two electric modules to be connected. By sliding the screw relative to the busbar, this adjustment can be carried out in a force-free manner and, in particular, without generating an elastic restoring force. The presence of the rotatable screw guide gives the screw an additional degree of freedom during position adjustment, as will be explained in more detail below.

The extent of the possible compensation depends mainly on the geometry of the screw, the hole of the screw guide and the through opening of the busbar. The length and, above all, the flexibility of the busbar are irrelevant. Consequently, a rigid, especially solid busbar can be used for the module connector.

With the further configurations explained in the following, the above solution can be further improved. In this context, the individual configurations are each preferred independently and can be combined with each other as desired.

According to one possible configuration, the at least one screw may be held slidably in the through opening simultaneously or sequentially along two mutually perpendicular directions (e.g., X and Y directions), wherein the two directions both extend parallel to the busbar plane. In other words, a plane spanned by the two directions is coplanar with the busbar plane. By a linear combination of movements in the X and Y directions, the at least one screw can be slid along the busbar plane. Thus, the module connector has a degree of freedom comparable to that of a flexible conductor section.

The busbar preferably has two flat faces that are parallel and opposite each other. The through opening of the busbar correspondingly connects both flat faces. Furthermore, the through opening of the busbar is optionally located at one end section of the busbar. Thus, the entire length of the busbar can be utilized when connecting the electric modules.

In order to compensate for changes in length due to temperature fluctuations, the busbar can comprise a bend, for example a U-shaped bend, especially in the center. Alternatively, the busbar can have a flexible conductor section, for example a cable, a knitted fabric, a woven fabric or a braid. The flexible conductor section or the bend serve exclusively to compensate for temperature-related changes in length. The compensation of the positional tolerance should be carried out exclusively via the sliding of at least one screw relative to the busbar and without elastic deformation of the flexible conductor section or the bend. Only in this way does the connection between the module connector and the electric modules remain force-free.

The at least one screw can comprise a screw shaft with external thread and a screw head fastened to the screw shaft. Thus, advantageously, a commercially available fastening element can be used. The screw shaft is inserted through the hole of the at least one screw guide, wherein the screw head rests on the at least one screw guide. Depending on the outer diameter of the screw head and the screw guide, the screw head can also additionally rest on the at least one flat face of the busbar.

However, the at least one screw does not necessarily have to comprise an external thread. Instead of a thread, one or more latching elements or part of a bayonet lock can also be present.

In order that the clamping force of the at least one screw can be transmitted to the busbar via the at least one screw guide, even if the screw head does not rest on the busbar, the at least one screw guide is adapted to be positively connected to the busbar. In particular, the at least one screw guide and the busbar can form a one-sided positive connection acting perpendicular to the busbar plane.

For this purpose, the at least one screw guide can comprise a flange-shaped section that is supported on the at least one flat face of the busbar. The flange-shaped section can, for example, form a continuous outer flange that extends circumferentially around the at least one screw guide. Alternatively, the flange-shaped section may comprise at least one interruption in the circumferential direction to save material.

In order that the at least one screw guide does not itself get in the way of the already mentioned transmission of the clamping force, the at least one screw guide does not protrude from the through opening on the side of the busbar opposite the flange-shaped section. In other words, the at least one screw guide on the side of the busbar opposite the flange-shaped section is flush with the flat face there or is recessed into the flat face there.

According to a space-saving configuration with low installation height, the at least one screw guide can be adapted to be disk-shaped or ring-shaped. For the already mentioned positive connection between the at least one screw guide and the busbar, the disk-shaped adapted screw guide can comprise a stepped edge. More precisely, the outer edge of the disk-shaped adapted screw guide may comprise a stepped shoulder projecting radially outward, which forms the flange-shaped section.

Additionally or alternatively, the through opening of the busbar can also be stepped. In other words, the inner edge of the through opening can have a stepped shoulder on which the at least one screw guide is positively seated.

Alternatively, the disk-shaped adapted screw guide can have a conical outer edge, i.e. an edge with an outer cone. Correspondingly, the through opening of the busbar can then have a conical inner edge, i.e. an edge with an inner cone.

According to a configuration that is easy to manufacture, the hole of the at least one screw guide may be a preferably straight oblong hole the longitudinal direction of which extends parallel to the busbar plane. The width of the oblong hole measured perpendicular to the longitudinal direction may correspond to the outer diameter of the screw shaft. In particular, the at least one screw can be held slidably in this oblong hole. The already mentioned slidability of the at least one screw parallel to the busbar plane then results from its slidability in the oblong hole in combination with the rotatability of the at least one screw guide relative to the busbar. In other words, the alignment of the longitudinal direction of the oblong hole is freely changeable by rotating the at least one screw guide within the busbar plane, so that the at least one screw is slidable parallel to the busbar plane.

However, the hole of the at least one screw guide does not necessarily have to be adapted as an oblong hole. For example, the hole of the at least one screw guide can also be adapted as a curved slot that is as wide as the screw shaft and extends parallel to the busbar plane through the at least one screw guide. Alternatively, the hole of the at least one screw guide can also be circular and have an inner diameter corresponding to the outer diameter of the screw shaft.

It is useful to arrange the hole, in particular the circular hole of the at least one screw guide, offset from the center of rotation of the at least one screw guide. Thus, even with an accurately fitting circular hole, the at least one screw is movable by rotation of the at least one screw guide at least on a circular path parallel to the busbar plane. Of course, the hole of the at least one screw guide adapted as an oblong hole or as a curved slot can also be offset from the center of rotation.

Alternatively or additionally, the through opening of the busbar can be adapted as an oblong hole. In this configuration, the at least one screw together with the at least one screw guide would be movable in the through opening. The direction of sliding would then be predetermined by the direction of the oblong hole. Of course, the through opening of the busbar can also be circular.

According to another possible configuration, the module connector can comprise at least one contact bridge with a central opening that is pressed at least sectionally into the through opening of the busbar. Alternatively or additionally, the at least one contact bridge can also be welded into the through opening of the busbar. The central opening preferably extends parallel to the through opening, wherein the at least one screw guide is rotatably held at least sectionally in the central opening.

The at least one contact bridge can contribute to a reduction of the electrical resistance of the module connector. In particular, if a busbar made of aluminum or aluminum alloy, the surface of which tends to form poorly conducting oxide layers, is used, these oxide layers can be broken up when the at least one contact bridge is pressed in and/or welded in. The at least one contact bridge itself can be made of a material that is less prone to oxidation, for example copper or copper alloy.

Optionally, the central opening of the at least one contact bridge can be configured in a stepped or conical manner so that a positive connection between the at least one screw guide and the at least one contact bridge is possible. If the at least one screw guide has the already mentioned flange-shaped section, this can also additionally or alternatively be supported on the at least one contact bridge.

In order to improve the rotatability of the at least one screw guide in the through opening of the busbar or in the central opening of the at least one contact bridge, the at least one screw guide can be adapted to be circular. In particular, the disk-shaped adapted screw guide may have a circular outer edge.

According to another possible configuration, the module connector may comprise at least one contact ring abutting the busbar and/or the at least one contact bridge. Advantageously, the at least one contact ring can act as a predefined interface to a mating contact of one of the two electric modules. Thus, the busbar itself does not have to form this predefined interface and can make do with a comparatively simple geometry.

The at least one contact ring may be adapted to be hollow cylindrical with a circular or polygonal base surface and a circular or polygonal end surface. Furthermore, the at least one contact ring may have a continuous ring opening, wherein the ring opening is preferably aligned with the hole of the at least one screw guide. In particular, the ring opening is aligned with the hole of the at least one screw guide in a direction perpendicular to the busbar plane. Preferably, the at least one contact ring is connected to the at least one screw in a movement-transmitting manner. For example, the at least one contact ring can be plugged onto the screw shaft on the side of the busbar opposite the screw head. In other words, the screw shaft is inserted into the ring opening at least sectionally. Thus, the at least one contact ring can move along with the at least one screw relative to the busbar during tolerance compensation.

As mentioned in part above, the busbar, the at least one contact bridge and the at least one contact ring are made of material with good electrical conductivity, for example aluminum, copper or alloys thereof. In particular, these components can form a current path through the module connector along which current flows from one to the other of the two electric modules. The at least one screw guide and the at least one screw may be made of electrically conductive material, for example steel, and/or electrically insulating material.

In order to improve electrical safety, the module connector can comprise an electrically insulating housing, in which at least the busbar is received, as finger and touch protection. The finger and/or touch protection can be adapted in particular in accordance with standards and prevents accidental contact with a current-carrying component of the module connector during operation.

Optionally, the at least one contact bridge, the at least one contact ring, the at least one screw and/or the at least one screw guide can also be received in the housing. In particular, the at least one screw can be held in the housing so as to be rotatable about an axis of rotation and slidable along the axis of rotation for fastening to one of the two electric modules. This configuration enables simple fastening, for example by means of an external thread or a bayonet lock.

The housing may comprise a first housing part which is movement-transmittingly connected to the at least one screw and movable relative to the busbar. Further, the first housing part may form a cover that covers the busbar in all sliding positions of the at least one screw together with the rest of the housing. In particular, the cover can ensure that there are no gaps that would allow human fingers to touch the busbar. Thus, finger and contact protection of the busbar is always ensured even though the screw can be slid. Optionally, the at least one screw, the at least one screw guide and/or the at least one contact bridge can also be covered by the first housing part.

According to a further configuration, the housing can comprise a second housing part, which is connected to the first housing part via the at least one screw and possibly via the at least one contact ring in a movement-transmitting manner and is movable relative to the busbar. Preferably, the second housing part is arranged opposite the first housing part with respect to the busbar.

With the second housing part, finger and contact protection of the at least one contact ring, which is located on the opposite side of the busbar, can thus be achieved.

The rest of the housing (i.e. housing without first and second housing part) can be adapted from two or more housing shells which can be latched together. One of these housing shells may comprise a housing opening into which the first housing part is inserted. Correspondingly, another housing shell may also have a housing opening into which the second housing part is inserted. The first housing part and the second housing part have a stroke or radius of movement within the respective housing opening.

Preferably, the first housing part is captively received together with the at least one screw in one of the housing shells. The second housing part is correspondingly captively received together with the at least one contact ring in another housing shell. The captive fitting allows the module connector to be easily handled during assembly.

The housing shells can be assembled and closed around the section of the busbar with the through opening. Prior to assembly, the first and second housing sections can be inserted into their respective housing openings. This allows the captive fitting to be made in a simple manner.

The first housing part can be molded onto the at least one screw, in particular onto its screw head. This reduces the number of components required. Alternatively, the first housing part can be a replaceable separate component, for example an intermediate ring. The first housing part adapted as an intermediate ring is located between one of the housing shells and the screw head of the at least one screw.

If the first housing part is present as an intermediate ring, a cap may be fitted or molded onto the screw head as part of the finger and contact protection.

Optionally, a further cap can also be fitted or molded onto a tip of the screw shaft facing away from the screw head as part of the finger and contact protection.

The second housing part can be a separate component, for example also in the form of an intermediate ring, or it can be molded onto the at least one contact ring. The second housing part adapted as an intermediate ring is located between the other housing shell and the at least one contact ring.

According to a configuration that is easy to manufacture, the first housing part and/or the second housing part can each have a protective collar that extends around the at least one screw or around the at least one contact ring and, in all sliding positions, overlaps sectionally at least with the rest of the housing perpendicular to the busbar plane. The respective protective collar preferably extends in the shape of a flange and parallel to the busbar plane.

Optionally, a combination of one flange each facing outwards on the first housing part or on the second housing part and one flange facing inwards on the rest of the housing can also be used, wherein the flanges overlap at least sectionally in all sliding positions. Preferably, the flanges still overlap when the largest possible distance and the smallest possible distance between the two electric modules are occupied. In particular, the inside diameter of the flange facing inwards is smaller than or equal to the outside diameter of the respective flange facing outwards.

The problem described introductoriy can also be solved by a connection assembly with a module connector according to one of the embodiments already described, a contact element and a mating part to the at least one screw, wherein the contact element is adapted to make electrically conductive contact with the module connector when the at least one screw and the mating part are screwed together. The contact element represents the already mentioned mating contact to the module connector and can directly contact the busbar and/or, if present, the at least one contact ring.

The connection assembly benefits from the advantages of the module connector according to the invention already explained. In particular, the mating part of the screw and the contact element can be stationarily pre-installed, for example on one of the two electric modules. Any deviations from a desired position can be compensated owing to the mobility of the screw and, if necessary, of the contact ring.

The mating part to the at least one screw can be adapted, for example, as a nut or threaded sleeve with an internal thread complementary to the external thread of the screw shaft.

The at least one screw is preferably rotatable and slidable until it is completely screwed tight to the mating part. After screwing, the frictional forces, in particular on the thread and between the screw head and the screw guide, prevent rotatability. In turn, the slidability is mainly prevented by the resulting positive connections.

As already described, the through opening of the busbar may be located at one end section of the busbar. Another end section of the busbar opposite the end section having the through opening can be welded, screwed or otherwise stationarily installed on the electric module without a mating part and contact element.<

Alternatively, both end sections of the busbar can each be provided with a through opening, a screw guide, a screw, a contact bridge and a contact ring. In particular, both end sections of the busbar can be adapted identically. Thus, larger distance changes can be compensated. In this case, the connection assembly has two contact elements and two screw mating parts.

In the following, the invention is explained by means of a merely exemplary configuration with reference to the drawings. The configuration shown merely represents a possible combination of features. Individual features of a configuration can be omitted in accordance with the above explanations if the technical effect associated with the respective feature is not important for a particular application. Conversely, a feature can be added to the described configuration if the technical effect associated with this feature is important for a specific application of the configuration.

In the drawings, the same reference signs are used for features that correspond to each other in terms of function and/or structure.

It is shown by:
- Fig. 1: a schematic perspective exploded view of a module connector according to an exemplary embodiment;
- Fig. 2: another schematic perspective exploded view of the module connector of Fig. 1 in a different view;
- Fig. 3: a schematic perspective partial sectional view of a connection assembly according to an exemplary embodiment;
- Fig. 4: a schematic perspective sectional view of the module connector of Fig. 1;
- Fig. 5: another schematic perspective sectional view of the module connector of Fig. 1 with a different sectional plane; and
- Fig. 6: another schematic sectional view of the module connector of Fig. 1 with a different sectional plane in top view.

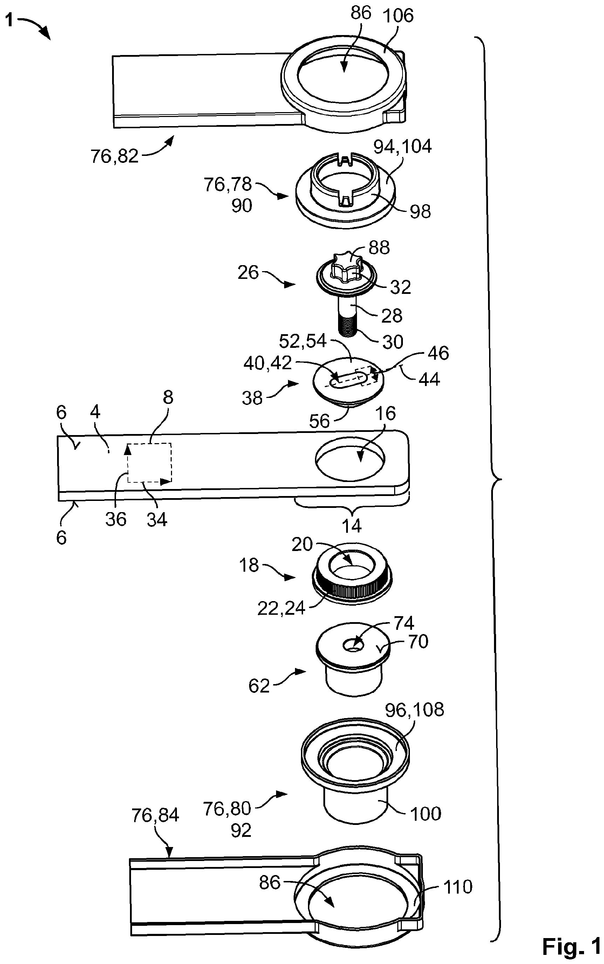

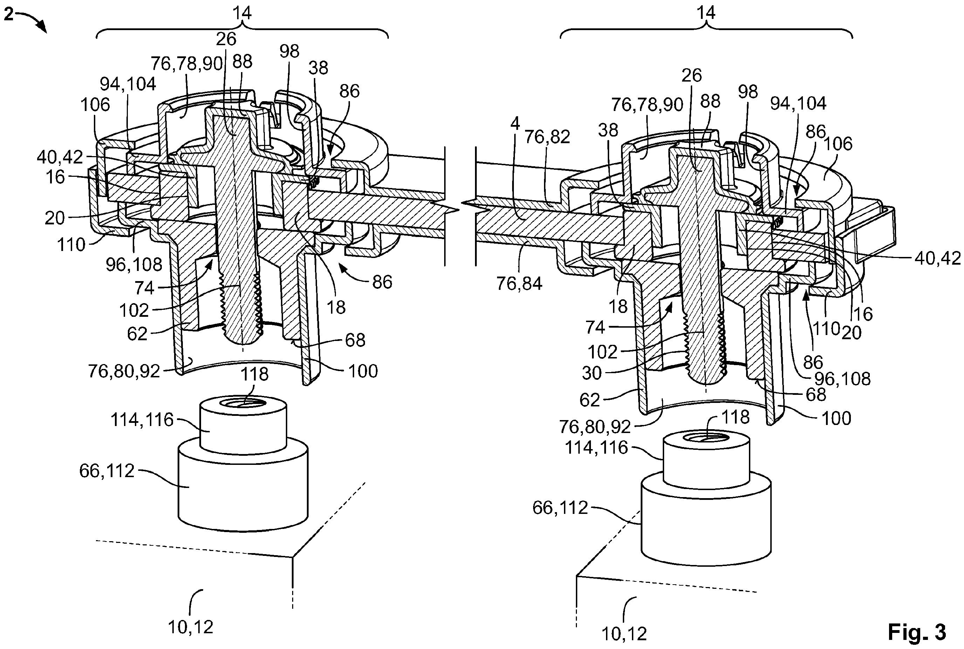

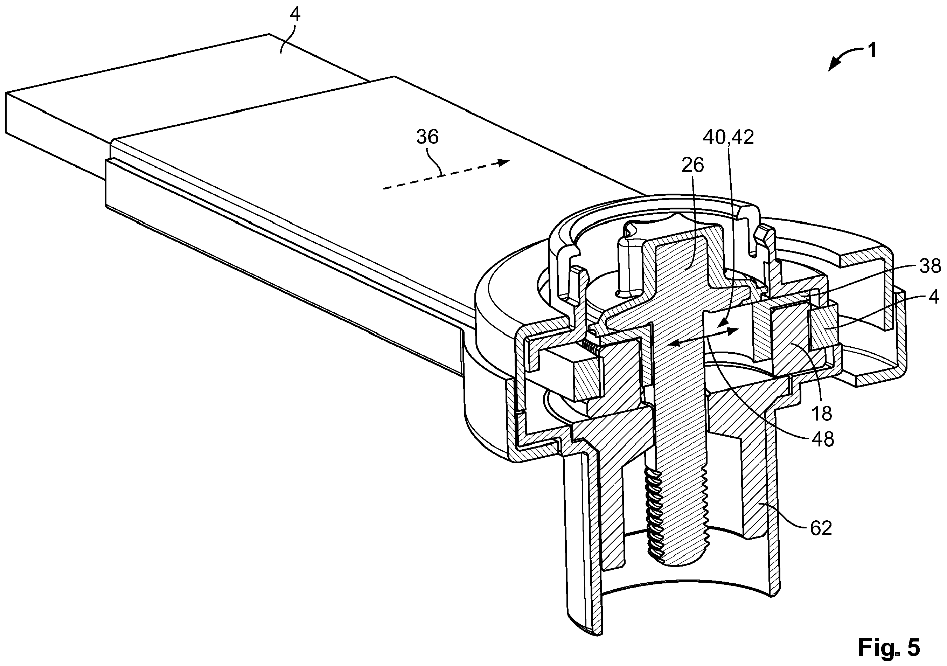

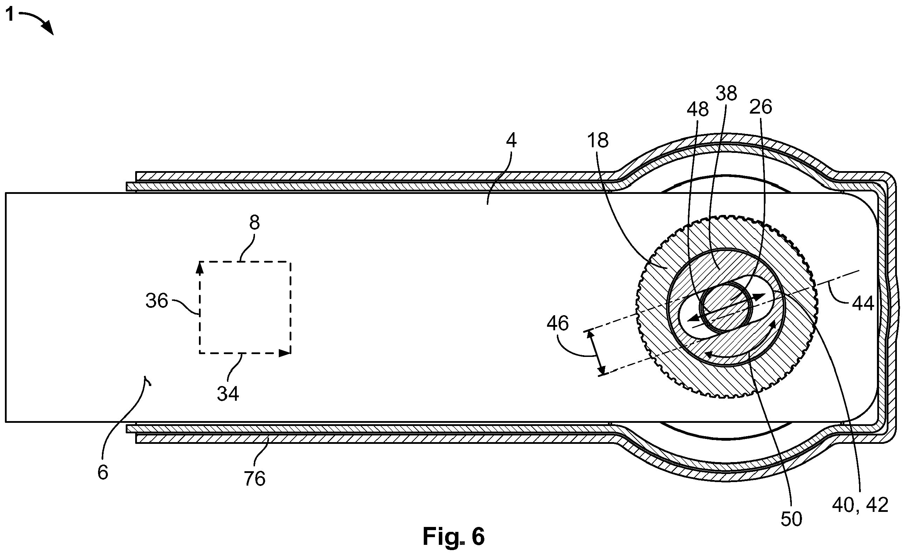

In the following, a module connector 1 according to an exemplary embodiment is described with reference to Figs. 1 to 6. Furthermore, a connection assembly 2 according to an exemplary embodiment is described with reference to Fig. 3.

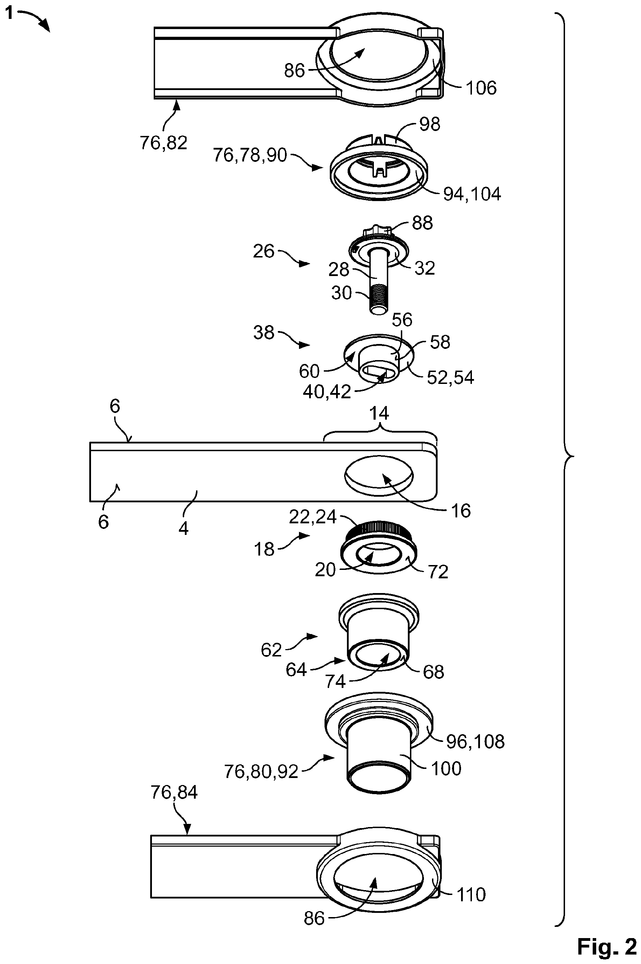

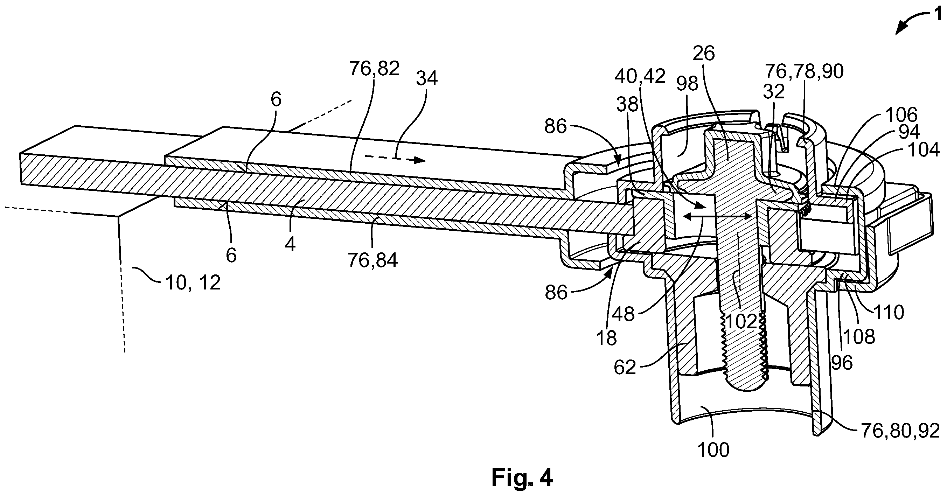

In Figs. 1 and 2, the module connector 1 is shown in exploded view from two different perspectives. In Figs. 4, 5 and 6, the module connector 1 is shown in sectional view with three different sectional planes in each case. In Fig. 3, the connection assembly 2 with the module connector 1 is shown in a partial sectional view. The connection assembly 2 is used to connect two electric modules 10, for example two battery modules 12, in particular two battery modules of an electric vehicle (not shown), to each other in an electrically conductive manner via the module connector 1.

The module connector 1 comprises a busbar 4. The busbar 4 has at least one flat face 6 that defines a busbar plane 8. Preferably, the busbar 4 has two flat faces 6 that are parallel and opposite each other. Upon connecting the electric modules 10, the flat faces 6 of the busbar 4 are aligned facing toward and away from the electric modules 10 (see Fig. 3).

In the embodiment shown, the busbar 4 has a rectangular conductor cross-section. Other conductor cross-sections, for example square, polygonal, circular oval or U-shaped conductor cross-sections are also possible.

According to an embodiment not shown, the busbar 4 may comprise a bend, for example a U-shaped bend. Alternatively, the busbar 4 can have a flexible conductor section, for example a cable, a knitted fabric, a woven fabric or a braid. The flexible conductor section or the bend serve exclusively to compensate for temperature-related changes in length.

At least one section of the busbar 4, in particular an end section 14, comprises a through opening 16 extending through the busbar 4 perpendicular to the busbar plane 8. The through opening 16 connects both flat faces 6 of the busbar 4 to each other.

In the embodiment shown, the through opening 16 of the busbar 4 is adapted to be circular and with a constant inner diameter. According to an embodiment not shown, the through opening 16 of the busbar 4 can also be stepped. In other words, the inner edge of the through opening 16 may comprise a stepped shoulder. Alternatively, the through opening 16 of the busbar 4 can have a conical inner edge, i.e. an edge with an inner cone.

For example, the busbar 4 may be made of copper, copper alloy, aluminum or aluminum alloy. If the busbar 4 is made of aluminum or aluminum alloy, the module connector 1 comprises at least one contact bridge 18 of copper or copper alloy adapted complementary to the through opening 16 to reduce the electrical resistance.

The contact bridge 18 is adapted to be pressed into the through opening 16 of the busbar 4, at least sectionally. For this purpose, the contact bridge 18 comprises a knurled section 22. In particular, the section 22 which is pressed into the through opening 16 has a knurl 24 projecting radially outwardly, wherein an outer diameter of the knurl 24 is slightly larger than an inner diameter of the through opening 16. Alternatively or additionally, the contact bridge 18 may be welded into the through opening 16.

The contact bridge 18 has a central opening 20 that is preferably parallel and coaxial with the through opening 16. The central opening 20 of the embodiment shown is adapted to be circular and with a constant inner diameter. Optionally, the central opening may be configured to be stepped or conical.

For attachment to the respective electric modules 10, the module connector 1 has at least one screw 26 that is rotatable relative to the busbar 4. The screw 26 shown has a screw shaft 28 with an external thread 30 and a screw head 32 attached to the screw shaft 28. According to an embodiment not shown, the screw 26 may also have one or more latching elements or a bayonet lock instead of the external thread 30.

As will be explained in more detail below, the screw 26 is held slidably parallel to the busbar plane 8 in the through pening 16 of the busbar 4 and in the central opening 20 of the contact bridge 18. In particular, the screw 26 is slidably held simultaneously or successively along two mutually perpendicular directions 34, 36, wherein the two directions 34, 36 are both parallel to the busbar plane 8. Thus, the screw 26 can be slid as desired along the busbar plane 8 by a linear combination of movements in the direction 34 and the direction 36 within a certain radius of movement.

In order to achieve this type of slidability of the screw 26, the module connector 1 comprises at least one disk-shaped screw guide 38. The screw guide 38 is held at least sectionally in the through opening and is rotatable relative to the busbar 4. If a contact bridge 18 is provided, the screw guide 38 can also be held at least sectionally in the central opening 20 of the contact bridge 18 and be rotatable relative to the contact bridge 18.

In order to improve the rotatability of the screw guide 38 in the through opening 16 of the busbar 4 or in the central opening 20 of the contact bridge 18, an outer edge of the screw guide 38 is adapted to be circular.

In particular, the screw guide 38 has a cylindrical section 56 with a circular shell surface 58, which is inserted into the central opening 20 of the contact bridge 18 or into the through opening 16 of the busbar. For this purpose, the cylindrical section 56 has an outer diameter that is less than or equal to the inner diameter of the central opening 20 of the contact bridge 18 or less than or equal to the inner diameter of the through opening 16 of the busbar 4.

The screw guide 38 comprises a hole 40 extending parallel to the through opening 16 of the busbar 4 and parallel to the central opening 20 of the contact bridge 18, in which the screw 26 is held at least sectionally. In particular, the screw shaft 28 is inserted through the hole 40 of the screw guide 38. The screw head 32 rests on the screw guide 38 (see Fig.4).

In the embodiment shown in Fig. 1, the hole 40 of the screw guide 38 is adapted as a straight oblong hole 42 the longitudinal direction 44 of which extends parallel to the busbar plane 8. The width 46 of the oblong hole 42 measured perpendicular to the longitudinal direction 44 corresponds to the outer diameter of the screw shaft 28.

As can be seen from Figs. 4, 5 and 6, the screw 26 is slidably held in the oblong hole 42. The alignment of the longitudinal direction 44 of the oblong hole 42 can be freely changed by rotating the screw guide 38 within the busbar plane 8. Depending on the alignment of the screw guide 38 and, in particular, its oblong hole 42, the screw 26 can be slid, for example, in a direction 34 extending parallel to the longitudinal direction of the busbar 4 and in a direction 36 extending perpendicular to the longitudinal direction of the busbar 4. This is indicated by the arrows 48 and 50, respectively. Therefore, the screw 26 can be slid along the busbar plane 8 as desired within the radius of movement already mentioned.

However, the hole 40 of the screw guide 38 does not necessarily have to be adapted as an oblong hole 42. According to an embodiment not shown, the hole 40 of the screw guide 38 can also be adapted as a curved slot that is as wide as the screw shaft 28 and extends through the screw guide 38 parallel to the busbar plane 8. Alternatively, the hole 40 of the screw guide 38 can also be circular and have an inner diameter corresponding to the outer diameter of the screw shaft 28. The circular hole of the screw guide 38 is preferably arranged offset from the center of rotation of the screw guide 38. Thus, the screw 26 is movable by rotation of the screw guide 38 at least on a circular path parallel to the busbar plane 8.

The screw guide 38 is adapted to be positively connected to the busbar 4 or to the contact bridge 18. In particular, the screw guide 38 and the busbar4 or the contact bridge 18 can form a unilateral positive connection perpendicular to the busbar plane 8.

For this purpose, the screw guide 38 has a flange-shaped section 52 that is supported on the contact bridge 18. Alternatively or additionally, the flange-shaped section 52 can also be supported on a flat face 6 of the busbar 4. The flange-shaped section 52 forms, for example, a continuous outer flange 54 extending circumferentially of the screw guide 38 around the cylindrical section 56.

The outer flange 54 has an outer diameter that is at least greater than the inner diameter of the central opening 20 of the contact bridge 18, or greater than the inner diameter of the through opening 16 of the busbar 4. Thus, the screw guide 38 has a stepped edge. In other words, the outer edge of the screw guide 38 has a stepped shoulder 60 formed by the flange-shaped section 52 and cylindrical-shaped section 56.

As can be seen from Fig. 4, the screw guide 38, in particular the cylindrical section 56 on the side of the contact bridge 18 opposite the flange-shaped section 52, does not protrude from the central opening 20 of the contact bridge 18. Furthermore, the screw guide 38, in particular the cylindrical section 56 on the side of the busbar 4 opposite the flange-shaped section 52, does not protrude from the through opening 16 of the busbar 4.

The module connector 1 also has at least one contact ring 62 made of a material with good electrical conductivity, for example aluminum, copper or their alloys. The contact ring 62 is adapted in the shape of a hollow cylinder with a circular base surface 68 and a circular end surface 70. At the base surface 68, the contact ring 62 forms a predefined interface 64 to a mating contact 66 of one of the two electric modules 10.

With its end surface 70, the contact ring 62 abuts the contact bridge 18 on a side of the contact bridge 18 opposite the flange-shaped section 52 of the screw guide 38. In order to increase the contact area between the contact bridge 18 and the contact ring 62, the contact bridge 18 has a widened end surface 72 and the contact ring 62 has a widened end surface 70. If no contact bridge 18 is provided, the contact ring 62 can also be in direct contact with the flat face 6 of the busbar 4 opposite the flange-shaped section 52 of the screw guide 38.

Further, the contact ring 62 has a continuous ring opening 74 aligned with the hole 40 of the screw guide 38 perpendicular to the busbar plane 8. The screw shaft 28 of the screw 26 is inserted into the ring opening 74 at least sectionally.

As can further be seen from Fig. 4, the module connector 1 has an electrically insulating housing 76 as finger and contact protection, in which the busbar 4, the contact bridge 18, the contact ring 62, the screw 26 and the screw guide 38 are received at least sectionally.

A cap 88 is molded onto the screw head 32 of the screw 26 as part of the finger and contact protection. According to an embodiment not shown, a cap can also be placed or molded on a tip of the screw shaft 28 facing away from the screw head 32 as part of the finger and contact protection.

The housing 76 comprises a first housing part 78, which is movement-transmittingly connected to the screw 26 and is movable relative to the busbar 4. The first housing part 78 forms a cover which, in all sliding positions of the screw 26, covers the busbar 4, the screw 26, the screw guide 38 and the contact bridge 18 together with the rest of the housing 76. In particular, the cover can ensure that there are no gaps that would allow human fingers to touch these components.

The housing 76 shown further comprises a second housing part 80, which is connected to the first housing part 78 via the screw 26 and via the contact ring 62 in a movement-transmitting manner and is movable relative to the busbar 4. The second housing part 80 is arranged opposite the first housing part 78 with respect to the busbar 4. The second housing part 80 covers the contact ring 62, which is located on the opposite side of the busbar 4.

The housing 76 shown further comprises a first housing shell 82 and a second housing shell 84, wherein the two housing shells 82, 84 are adapted to be latched together. The two housing shells 82, 84 each have a housing opening 86. The first housing part 78 is inserted into the housing opening 86 of the first housing shell 82, while the second housing part 80 is inserted into the housing opening 86 of the second housing shell 84. The first housing part 78 and the second housing part 80 have a stroke or radius of movement within the respective housing opening 86.

The first housing part 78 has a protective collar 94 which extends around the screw 26 and, in all sliding positions, overlaps at least sectionally with the first housing shell 82 perpendicular to the busbar plane 8. The second housing part 80 also has a protective collar 96 which extends around the contact ring 62 and, in all sliding positions, overlaps at least sectionally with the second housing shell 84 perpendicular to the busbar plane 8. The respective protective collar 94, 96 preferably extends in a flange shape and parallel to the busbar plane 8.

The first housing part 78 further includes a protective sleeve 98 extending circumferentially around the screw 26 and projecting perpendicularly from the protective collar 94 in the axial direction. The screw 26 is rotatable about an axis of rotation 102 and is slidably held in the protective sleeve 98 along the axis of rotation 102. The second housing part 80 in turn has a protective sleeve 100 which extends circumferentially around the contact ring 62 and projects perpendicularly from the protective collar 96 in the axial direction.

The housing shells 82, 84 are assembled and closed around the busbar 4, the contact bridge 18, the screw 26, the screw guide 38 and the contact ring 62. Prior to assembly, the first housing part 78 and the second housing part 80 are inserted into the respective housing opening 86.

The first housing part 78 is present as a replaceable separate intermediate ring 90 and is located between the first housing shell 82 and the screw head 32 of the screw 26. In particular, the intermediate ring 90 captively holds the screw 26 and the screw guide 38 while itself being captively held between the first housing shell 82 and the busbar 4.

For this purpose, the protective collar 94 of the first housing part 78 comprises an outwardly facing flange 104. The first housing shell 82 accordingly comprises an inward-facing flange 106 at its housing opening 86. The flanges 104, 106 overlap at least sectionally in all sliding positions. In particular, the inner diameter of the inwardly facing flange 106 is less than or equal to the outer diameter of the outwardly facing flange 104. Furthermore, the inner diameter of the inwardly facing flange 106 is greater than the outer diameter of the protective sleeve 98.

The second housing part 80 is also present as a separate intermediate ring 92 and is located between the second housing shell 84 and the contact ring 62. In particular, the intermediate ring 92 captively holds the contact ring 62 while itself being captively held between the second housing shell 84 and the busbar 4.

For this purpose, the protective collar 96 of the second housing part 80 has an outwardly facing flange 108. The second housing shell 84 has a corresponding inwardly facing flange 110 at its housing opening 86. The flanges 108, 110 overlap at least sectionally in all sliding positions. In particular, the inner diameter of the inwardly facing flange 110 is less than or equal to the outer diameter of the outwardly facing flange 108. Furthermore, the inner diameter of the inwardly facing flange 110 is greater than the outer diameter of the protective sleeve 100.

The connection assembly 2 shown in Fig. 3 has a module connector 1, wherein the busbar 4 of the module connector 1 has a through opening 16 at each of the two end sections 14. Furthermore, the end sections 14 are each provided with a screw guide 38, a screw 26, a contact bridge 18 and a contact ring 62. In particular, both end sections 14 are adapted identically.

The connection assembly 2 further comprises for each electric module 10 a contact element 112 and a mating piece 114 for the respective screw 26. The mating parts 114 are adapted as threaded sleeves 116 with an internal thread 118 complementary to the external thread 30 of the screw shaft 28.

The contact elements 112 are adapted to make electrically conductive contact with the module connector 1 when the screws 26 and the mating parts 114 are screwed together. The contact elements 112 contact the respective contact rings 62 at their base surfaces 68 forming the interfaces 64. If no contact rings 62 are provided, the contact elements 112 can also contact the busbar 4 or contact bridge 18 directly.

If the installation positions of the contact elements 112 and mating parts 114 deviate from a specified nominal position, this positional tolerance can be compensated for by moving the screws 26 together with the contact rings 62 to the actual installation positions. If necessary, the screw guides 38 are rotated to the correct position.

The screws 26 and contact rings 62 are rotatable and slidable until the screws 26 are fully screwed on the respective threaded sleeves. After screwing, the resulting frictional forces and positive connections prevent rotatability and slidability.

Alternatively, one of the end sections 14 of the busbar 4 may be directly welded, screwed, or otherwise stationarily installed to one of the electric modules 10 (see Fig. 4). In this case, the connection assembly 2 would require only one contact element 112 and one mating part 114 to the screw 26.

### Reference signs

- 1: module connector
- 2: connection assembly
- 4: busbar
- 6: flat face
- 8: busbar plane
- 10: module
- 12: battery module
- 14: end section
- 16: through opening
- 18: contact bridge
- 20: opening
- 22: section
- 24: knurl
- 26: screw
- 28: screw shaft
- 30: external thread
- 32: screw head
- 34: direction
- 36: direction
- 38: screw guide
- 40: hole
- 42: oblong hole
- 44: longitudinal direction
- 46: width
- 48: arrow
- 50: arrow
- 52: section
- 54: outer flange
- 56: section
- 58: shell surface
- 60: shoulder
- 62: contact ring
- 64: interface
- 66: mating contact
- 68: base surface
- 70: end surface
- 72: end surface
- 74: ring opening
- 76: housing
- 78: housing part
- 80: housing part
- 82: housing shell
- 84: housing shell
- 86: housing opening
- 88: cap
- 90: intermediate ring
- 92: intermediate ring
- 94: protective collar
- 96: protective collar
- 98: protective sleeve
- 100: protective sleeve
- 102: axis of rotation
- 104: flange
- 106: flange
- 108: flange
- 110: flange
- 112: contact element
- 114: mating part
- 116: threaded sleeve
- 118: internal thread

## Claims

1. Module connector (1) for electrically connecting two electric modules (10), wherein the module connector (1) comprises a busbar (4), at least one screw (26) rotatable relative to the busbar (4) and at least one screw guide (38) rotatable relative to the busbar (4), wherein the busbar (4) comprises at least one flat face (6), which defines a busbar plane (8), and at least one section of the busbar (4) comprises a through opening (16) extending perpendicularly to the busbar plane (8) through the busbar (4), wherein the at least one screw guide (38) is held at least sectionally in the through opening (16) and has a hole (40) extending parallel to the through opening (16), in which the at least one screw (26) is held at least sectionally, and wherein the at least one screw (26) is held in the through opening (16) slidably parallel to the busbar plane (8).

2. Module connector (1) according to claim 1, wherein the hole (40) of the at least one screw guide (38) is an oblong hole (42), the longitudinal direction (44) of which extends parallel to the busbar plane (8).

3. Module connector (1) according to claim 1 or 2, wherein the at least one screw guide (38) comprises a flange-shaped section (52) which is supported on the at least one flat face (6) of the busbar (4).

4. Module connector (1) according to claim 3, wherein the at least one screw guide (38) does not protrude from the through opening (16) on the side of the busbar (4) opposite the flange-shaped section (52).

5. Module connector (1) according to one of claims 1 to 4, wherein the at least one screw guide (38) is adapted to be disk-shaped.

6. Module connector (1) according to one of claims 1 to 5, wherein the module connector (1) comprises at least one contact bridge (18), which is at least sectionally pressed and/or welded into the through opening (16) of the busbar (4), with a central opening (20), wherein the central opening (20) extends parallel to the through opening (16), and wherein the at least one screw guide (38) is rotatably held in the central opening (20) at least sectionally.

7. Module connector (1) according to one of claims 1 to 6, wherein the module connector (1) comprises at least one contact ring (62) abutting the busbar (4), a ring opening (74) of which is aligned with the hole (40) of the at least one screw guide (38).

8. Module connector (1) according to claim 7, wherein the at least one contact ring (62) is connected to the at least one screw (26) in a movement-transmitting manner.

9. Module connector (1) according to claim 7 or 8, wherein the at least one screw (26) comprises a screw shaft (28) with an external thread (30) and a screw head (32) fastened to the screw shaft (28), wherein the at least one contact ring (62) is placed onto the screw shaft (28) on the side of the busbar (4) opposite the screw head (32).

10. Module connector (1) according to one of claims 1 to 9, wherein the module connector (1) comprises an electrically insulating housing (76) in which the busbar (4), the at least one screw (26) and the at least one screw guide (38) are received.

11. Module connector (1) according to claim 10, wherein the housing (76) comprises a first housing part (78) which is connected in a movement-transmitting manner to the at least one screw (26), is movable relative to the busbar (4) and forms a cover which, in all sliding positions of the at least one screw (26), covers the busbar (4) together with the rest of the housing (76).

12. Module connector (1) according to claim 11, wherein the first housing part (78) comprises a protective collar (94) extending around the at least one screw (26) and overlapping at least sectionally with the rest of the housing (76) perpendicular to the busbar plane (8) in all sliding positions of the at least one screw (26).

13. Module connector (1) according to claim 11 or 12, wherein the first housing part (78) is present as a separate component or is molded onto the at least one screw (26).

14. Module connector (1) according to one of claims 11 to 13, wherein the housing (76) comprises a second housing part (80), which is connected to the first housing part (78) via the at least one screw (26) in a movement-transmitting manner, is movable relative to the busbar (4) and is arranged opposite the first housing part (78) with respect to the busbar (4).

15. Connection assembly (2) with a module connector (1) according to one of claims 1 to 14, a contact element (112) and a mating piece (114) for the at least one screw (26), wherein the contact element (112) is adapted to make electrically conductive contact with the module connector (1) in the screwed-together state of the at least one screw (26) and the mating part (114).
